# NEW EUROPEAN PATENT SPECIFICATION

(11) **EP 0 439 469 B2**
(45) Date of publication and mention of the opposition decision: **10.02.1999**
(45) Mention of the grant of the patent: 11.10.1995
(21) Application number: 89909461.9
(22) Date of filing: 09.08.1989
(51) Int. Cl.: B32B 5/12

(54) **HIGH PERFORMANCE CONTINUOUS FIBER REINFORCED COMPOSITE GRID**
MIT KONTINUIERLICHEN FASERN VERSTÄRKTES KOMPOSITRASTER MIT HOHEM WIRKUNGSGRAD
GRILLE COMPOSITE A HAUT RENDEMENT RENFORCEE PAR DES FIBRES CONTINUES

(30) Priority: 05.10.1988 US 254316
(43) Date of publication of application: 07.08.1991
(73) Proprietor: LEUCADIA INC, New York, NY 10010 (US)
(72) Inventor: AMATA, Charles, D., Plymouth, MN 55441 (US)
(74) Representative: Charlton, Peter John
(86) International application number: US8903415
(87) International publication number: WO9003885

(56) References cited:
- EP-A- 199 827
- EP-A- 0 011 436
- DE-C- 1 938 060
- DE-C- 2 000 937
- FR-A- 1 517 794
- US-A- 3 843 303
- US-A- 4 137 354
- US-A- 4 201 814
- US-A- 4 636 419

## Description

This invention relates to improved plastic grid structures. Plastic grid structures have been used in various civil engineering applications, such as soil retention and reinforcement, as well as in other applications. These grid structures have not been as strong and as dimensionally stable as is desired. Typically the grid structures are comprised of intersecting strands which define a mesh structure or net. Preferably, the grid is rectangular or square with the strands placed at an angle of about 90° to each other. However, other shapes and other relative angles may be used. Both thermoset and thermoplastic plastic materials are also used. Presently available grid structures are marketed by the Geo-Synthetics Company as GSI Net 100, 200 and 300; by Signode as TNX 5001 & 250 and as CTX 1255 & 120; by Huesker Synthetic as HaTe Grid 80/30-20 and 40/40-20 and as HaTelit 30/13; by the Mirafi Company as Miragrid and as Paragrid; by Tensar corporation as UX 1100, 1200, 1300, 1400, 1500 and 1600 and as BX 1100, 1200, 1300 and 3110.

Plastic compound composites with reinforcement are known in which various types of fibers are embedded in plastic. Reference may be made to U.S. patents 4,439,387 and 4,312,917 which describe a compound composite structure of fiber embedded in a resin which is subsequently encased in additional plastic.

U.S. Patent 4,137,354 discloses a complex grid of interlaced and layered filaments which are embedded in a matrix of a thermosetting or thermoplastic resin.

Reference may also be made to an article entitled "Thermoplastics Open the Way to Mass-Produced RP Composites" by Joseph A. Sneller which appeared in the February 1985 issue of Modern Plastics. This article describes the availability of prepreg tapes formed by pultrusion using various plastics and fibers. These references are all incorporated herein by reference.

### Summary of the Invention

It is the purpose of this invention to provide plastic grid structures of improved strength and dimensional stability by incorporating compound composite plastic strands into the grid structure. Accordingly, the invention provides A plastic grid structure comprised of first and second sets of intersecting generally transverse series of polymeric elongate strand members in which the members of each set cross and intersect at more or less regular intervals with each other to form a net-like structure, and in which at least some of the strand members of the first set comprise reinforcing fibres embedded in or impregnated by a plastic matrix; characterised in that the strand members and plastic matrix which form the first set are further encapsulated in a second layer of plastic to form a compound composite reinforced structure and in that the strand members of the second set do not comprise reinforcing fibres and are formed of the plastic which forms said second layer of the first set.

### Brief Description of the Drawings

Fig. 1 shows schematic grid structure which may be provided in two different basic embodiments.
Fig. 2 shows in schematic form a die for making the grid structures of the invention.
Figs. 3 and 4 shows in schematic form another die arrangement. Fig. 3 is a fragmentary side elevational view with parts cutaway and Fig. 4 is an enlarged detail of the area circled at 4 in Fig. 3.

### Description of the Preferred Embodiments

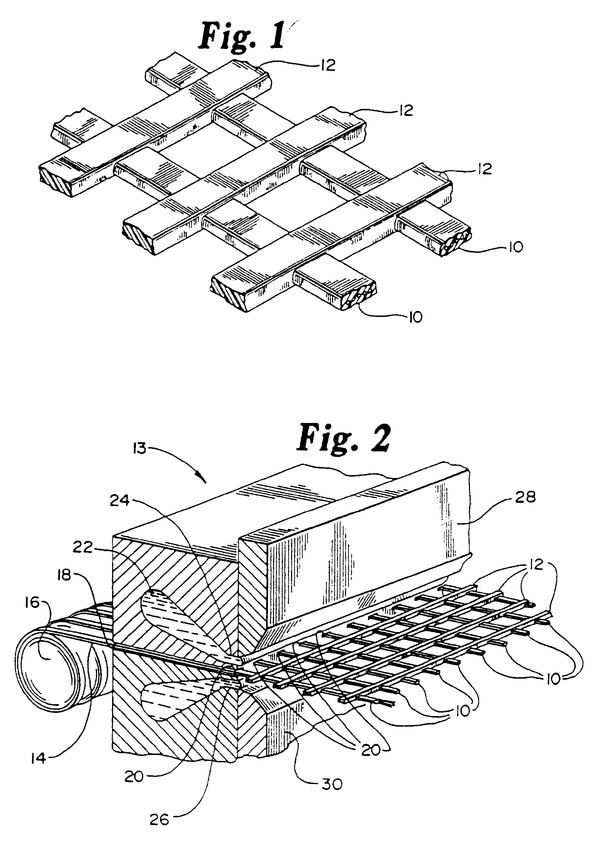

In the improved grid structures of the invention, continuous fiber reinforced/resin matrix compound composite strands are joined by unreinforced plastic strands. Referring to Fig. 1, the schematic grid structure shown may consist of strands 10 extending in one direction and strands 12 extending in a transverse direction. The strands are polymeric elongate members which cross and intersect to form the net-like structure. Only one of the sets of strands is be of the compound composite reinforced structure referred to above. The set which extends in what is referred to as the machine direction (MD) is the composite set. The composite strands may be formed with either thermoset or thermoplastic plastic; the latter being preferred. Formation of the composite strands is preferred to be by the resin impregnation pultrusion forming process but other forming and impregnation processes which produce thorough fiber wet-out with the resin and good fiber dispersion are also satisfactory. The structure of the compound composite strands will be better understood from the following description of a preferred method of formation of the grid structure i.e., the net.

Referring now to Fig. 2, an extrusion die 13 is shown for forming, the grid product. The machine direction strands (MD) 10 are the compound composite reinforced strands in this embodiment. They are formed by using what is termed a "prepreg" in the art. "Prepregs" are comprised of reinforcing fibers embedded in a plastic resin matrix. For example, prepreg tapes 14 wound on supply roll 16 may be comprised of continuous fibers of Type S-fiberglass embedded and uniformally dispersed in a high melt index polypropylene such as Fina 3861. The tapes are fed into entry points 18 in die 13. The prepreg tapes form the MD web as they are continuously pulled through the die to emerge from guides 20 and are fed from supply roll 16. Plastic resin 22, such as a low melt index polypropylene Himont PD403 (available from Himont Corp. of Wilmington DE) is supplied to the die under pressure and is discharged through slits 24 and 26 located adjacent guides 20. Normally the slits are closed by reciprocable pistons 28 and 30. When the pistons close the slits, resin is deposited only on the tapes, as they move through the die, to provide encapsulation of the prepreg in a second layer of plastic (forming a compound composite). When the pistons are moved to open the slits, plastic resin flows out to form transverse strands 12 (TD) which are composed solely of low melt index polypropylene i.e., such A3 Himont PD403. The resultant web or grid structure is like that shown in Fig. 1 in which the MD strands 10 are reinforced compound composite of continuous fibers, high melt index polyproylene and low melt index polypropylene. The TD strands 12, are low melt index polypropylene joined to the MD strands. By reciprocating the pistons as the prepreg tapes are pulled through the die a variety of net-like or grid structure webs may be formed. Various plastics and fibers may be used in a wide combination of materials. Fibers such as glass, carbon, graphite, polyaramid fibers, ceramic fibers and various metals may be used. Plastics such as polyethylene, nylons, ABS, PVC, Polyesters and Polyphenylenesulfides maybe used.

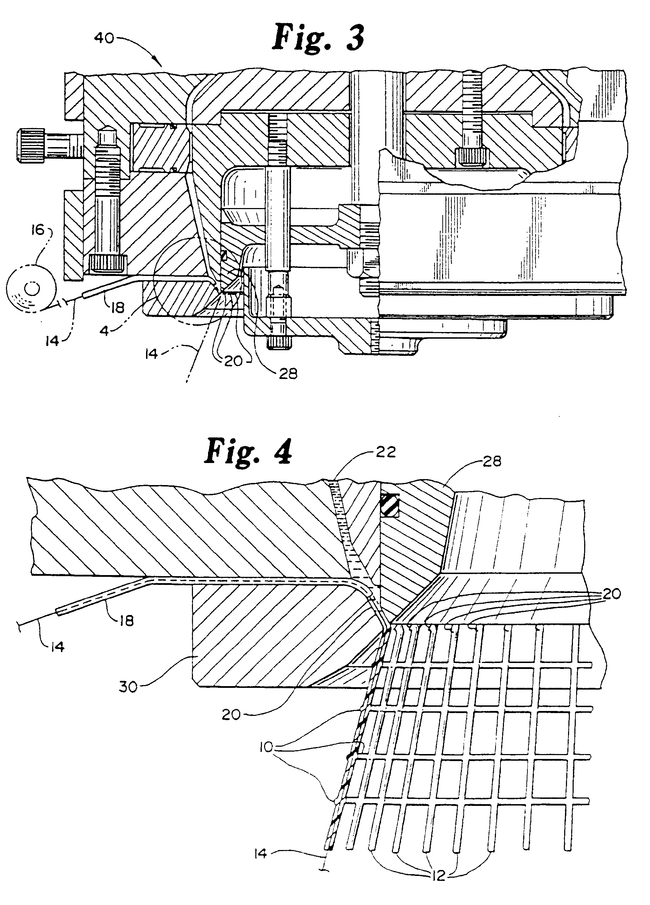

Referring now to Figs. 3 and 4, they show in schematic a cylindrical die based system for forming the grid. Like elements are similarly numbered as in Figs. 1 and 2. At the present writing, this die arrangement may represent the most useful production die for preparing the compound composite grid of the invention. It operates in a similar manner to the die in Fig. 2.

Compared to previous grid structures used for reinforcement of soils in various civil engineering applications, a grid produced with continuous fiber reinforced composite strands in either one or both directions has significant advantages. These advantages are primarily, but not exclusively, as follows:

Ability to incorporate desired tensile properties by choice of fiber-type, fiber-content, and plastic matrix type.

Significantly improved tensile properties (higher tensile strength and much higher modulus) at lower unit weight.

Greater geometric (dimensional) stability under load, especially compared with woven or knitted fiber grid products.

Comparison of the invention versus the premier product currently on the market by Tensar Corp. of Marietta, Ga. for soil reinforcement (Tensar UX1200) shows the following:

| Product (*) | Weight #/m² (#/sq ft.) | MD Strand Breaking Force (#/strand) |
|---|---|---|
| Tensar SR-2 (MDSC-20 per 0.3m) (TDSC-3 per 0.3m) (Unidirectional Strength in MD) | 0.0175 (0.188) | 269 |
| Ex-1 | 0.0171 (0.183) | 1350 |
| Ex-2 | 0.0148 (0.159) | 1125 |
| Ex-3 | 0.0125 (0.134) | 900 |
| Ex-4 | 0.0102 (0.110) | 675 |
| Ex-5 | 0.0037 (0.040) | 450 |

| | | |
|---|---|---|
| * Ex-1 through 5 all illustrate S-glass filaments which are oriented in the machine direction MD. Strand count MD = 20 per 0.3m of width (20/ft) and TD = 3 per 0.3m of width (3/ft). MD strand break forces for Ex-1 through 5 are derived from theoretical analysis based on 60 vol % continuous S-glass fibers in a matrix of 40 vol % polypropylene and a tensile strength of the glass fibers = 250,000 psi. ** Actual measurements of strand breaking force are difficult to make due to the very high strength of the composite strands. However, preliminary attempts on Ex-1 have shown that 750 #/strand < Force (actual) < 1350 #/strand and it is estimated that Force (actual) is about 90% of the calculated value. That is, maximum force measured before slippage of the sample was observed in the jaws of the test machine and was found to be 750#/strand. Based on calculations, the force should have been 1350 #/strand. Therefore, the actual value of the test sample, had there been no slippage, would be between 750 #/strand and 1350 #/strand. It is estimated that it would have been approximately 90% of the calculated 1350 #/strand. | | |

This completes the description of the preferred and alternate embodiments of the invention. Those skilled in the art may recognize other equivalents to the specific embodiment described herein, which equivalents are intended to be encompassed by the claims attached hereto.

While this invention may be embodied in many different forms, there are shown in the drawings and described in detail herein specific preferred embodiments of the invention.

## Claims

1. A plastic grid structure comprised of first and second sets of intersecting generally transverse series of polymeric elongate strand members in which the members of each set cross and intersect at more or less regular intervals with each other to form a net-like structure, and in which at least some of the strand members of the first set comprise reinforcing fibres embedded in or impregnated by a plastic matrix; characterised in that the strand members and plastic matrix which form the first set are further encapsulated in a second layer of plastic to form a compound composite reinforced structure and in that the strand members of the second set do not comprise reinforcing fibres and are formed of the plastic which forms said second layer of the first set.

2. The grid structure of claim 1 in which the plastics are of the thermoplastic type.

3. The grid structure of claim 1 in which the plastics are of the thermoset type.

4. The grid structure of any preceding claim in which the plastics are of different melting points.

5. The grid structure of any of claims 1 to 3 in which the plastics are different plastic materials from one another.

6. The grid structure of claim 1 in which the members of both sets are substantially flat and generally rectangular in cross-section.

7. The grid structure of claim 1 in which the sets intersect with each other at about 90°.

8. The grid structure of claim 1 in which the plastic is polypropylene.

9. The grid structure of claim 1 in which the reinforcing fibers are of fiberglass.

10. The grid structure of claim 1 in which the reinforcing fibers are of polyaramid.

11. The grid structure of claim 1 in which the reinforcing fibers are of carbon fiber.

12. The grid structure of claim 1 in which the improved strand members extend in the MD.

13. The grid structure of claim 1 in which all of the MD strands are of compound composite structure.

## Patentansprüche

1. Kunststoff-Gitterstruktur, die aus ersten und zweiten Sätzen sich überschneidender im allgemeinen quer verlaufender Serien von polymeren länglichen Strangteilen besteht, bei der sich die Teile eines jeden Satzes in mehr oder weniger regelmäßigen Intervallen miteinander kreuzen und überschneiden, um eine netzartige Struktur zu bilden, und bei der wenigstens einige der Strangteile des ersten Satzes in einer Kunststoff-Matrix eingebettete oder durch sie imprägnierte verstärkende Fasern umfassen; dadurch gekennzeichnet, daß die Strangteile und die Kunststoff-Matrix, die den ersten Satz bilden, des weiteren in einer zweiten Schicht aus Kunststoff eingekapselt sind, um eine zusammengesetzte verstärkte Kompositstruktur zu bilden, und daß die Strangteile des zweiten Satzes keine verstärkenden Fasern umfassen und aus dem Kunststoff gebildet sind, der die genannte zweite Schicht des ersten Satzes bildet.

2. Gitterstruktur nach Anspruch 1, bei der die Kunststoffe von thermoplastischer Natur sind.

3. Gitterstruktur nach Anspruch 1, bei der die Kunststoffe von wärmeausgehärteter Natur sind.

4. Gitterstruktur nach einem der vorhergehenden Ansprüche, bei der die Kunststoffe verschiedene Schmelzpunkte aufweisen.

5. Gitterstruktur nach einem der Ansprüche 1 bis 3, bei der die Kunststoffe voneinander verschiedene Kunststoff-Materialien sind.

6. Gitterstruktur nach Anspruch 1, bei der die Teile beider Sätze im wesentlichen flach sind und im allgemeinen einen rechtwinkligen Querschnitt aufweisen.

7. Gitterstruktur nach Anspruch 1, bei der sich die Sätze untereinander mit ungefähr 90° überschneiden.

8. Gitterstruktur nach Anspruch 1, bei der der Kunststoff Polypropylen ist.

9. Gitterstruktur nach Anspruch 1, bei der die verstärkenden Fasern Glasfasern sind.

10. Gitterstruktur nach Anspruch 1, bei der die verstärkenden Fasern aus Polyaramid sind.

11. Gitterstruktur nach Anspruch 1, bei der die verstärkenden Fasern Kohlenstoff-Fasern sind.

12. Gitterstruktur nach Anspruch 1, bei der sich die verbesserten Strangteile in der MD erstrecken.

13. Gitterstruktur nach Anspruch 1, bei der alle MD-Stränge aus der zusammengesetzten Kompositstruktur bestehen.

## Revendications

1. Une structure de grille en plastique constituée d'un premier et d'un second ensembles de séries, généralement transversales et se coupant, d'éléments de brins polymériques allongés, dans lesquels les éléments de chaque jeu se croisent et se coupent les uns les autres à des intervalles plus ou moins réguliers, pour former une structure en réseau, et dans laquelle au moins certains des éléments de brins du premier ensemble comportent des fibres de renforcement incorporées dans une matrice en plastique ou imprégnées par celle-ci ; caractérisée en ce que les éléments de brins et la matrice en plastique qui forment le premier ensemble sont en outre encapsulés dans une seconde couche de plastique pour former une structure renforcée composite combinée et en ce que les éléments de brins du second ensemble ne comportent pas de fibres de renforcement et sont formés par le plastique qui forme ladite seconde couche du premier ensemble.

2. La structure de grille selon la revendication 1, dans laquelle les plastiques sont du type thermoplastique.

3. La structure de grille selon la revendication 1, dans laquelle les plastiques sont du type thermodurcissable.

4. La structure de grille selon l'une quelconque des revendications précédentes, dans laquelle les plastiques ont des points de fusion différents.

5. La structure de grille selon l'une quelconques des revendications 1 à 3, dans laquelle les plastiques sont des matières plastiques qui diffèrent les unes des autres.

6. La structure de grille selon la revendication 1, dans laquelle les éléments des deux ensembles sont essentiellement plats et ont une section transversale généralement rectangulaire.

7. La structure de grille selon la revendication 1, dans laquelle les éléments se coupent à 90° environ.

8. La structure de grille selon la revendication 1, dans laquelle le plastique est du polypropylène.

9. La structure de grille selon la revendication 1, dans laquelle les fibres de renforcement sont en fibre de verre.

10. La structure de grille selon la revendication 1, dans laquelle les fibres de renforcement sont en polyaramide.

11. La structure de grille selon la revendication 1, dans laquelle les fibres de renforcement sont en fibre de carbone.

12. La structure de grille selon la revendication 1, dans laquelle les éléments de brins améliorés s'étendent dans la direction de la machine DM.

13. La structure de grille selon la revendication 1, dans laquelle tous les brins dans la direction de la machine DM ont une structure composite combinée.
